# EUROPEAN PATENT APPLICATION

(11) **EP 1 443 701 A1**
(43) Date of publication of application: **04.08.2004**
(21) Application number: 03290241.3
(22) Date of filing: 31.01.2003
(51) Int. Cl.: H04L 12/24, H04L 29/06

(54) **Management of a communications terminal using a management platform in a different administrative domain**

(71) Applicant: Motorola Inc., Schaumburg, IL 60196 (US)
(72) Inventor: El-Khazen, Karim, 75016 Paris (FR); Martinez, Georges, 75013 Paris (FR); State, Radu, 91400 Saclay (FR)
(74) Representative: Wharmby, Martin Angus

(57) **Abstract**

A method of and apparatus for terminal management in a communication network, comprising communicating terminal management messages from a management platform (18) to the managed terminal (17), even where the managed terminal (17) is situated in a different administrative domain from the management platform (18). The management messages are encoded in messages addressed to the managed terminal (17) and sent to an intermediate server (24, 27, 28) in the network, the intermediate server (24, 27, 28) being accessible to the managed terminal (17). The method is particularly applicable where the managed terminal (17) communicates with the network over at least one wireless link (19). Preferably, the management messages are transported encoded in a message protocol used for sending data messages.

## Description

### Field of the invention

This invention relates to management of a communications terminal situated in one administrative domain using a management platform in a different administrative domain.

### Background of the invention

In communications networks, it is often desirable to be able to perform management operations in a communications terminal using a remote management platform in the network. Such a terminal may be a user terminal or may be any other terminal, such as a server, for example. One particular case of a user terminal is a wireless telephone.

Generally speaking, such management operations consist in taking care of the administration of a terminal regarding its hardware parameters and software components. Such remote terminal management is operated by a party other than the terminal user, like the terminal manufacturer (or a delegated authority), a service provider, a network operator, for example. One objective of terminal management may be to enable marketable added-value services like customer care. For management purposes, the third party in charge of the terminal management platform maintains a database that reflects the terminal state.

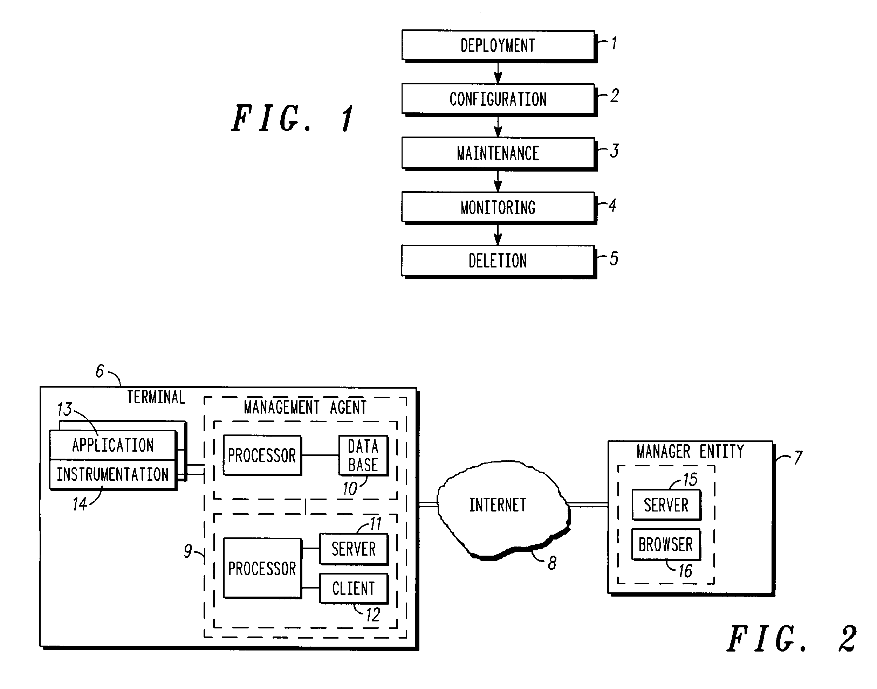

In the case of terminal software management, the management operations may cover the whole life cycle of a software component within the terminal, as summarised in the Figure 1 of the accompanying drawings. Thus, remote management of the terminal software may start with a deployment operation 1. The deployment operation 1 consists in downloading to and installing a software component into the terminal. Such a software component can be downloaded even over a wireless link, if desired. The deployment is in principle possible once the rights to access the software component, as well as the terminal capabilities to host the software have been checked.

A next possible operation in terminal software management is a configuration operation 2. A configuration operation consists in fixing the parameters either of the installed software component, or other components in the terminal (or both), in order to ensure proper start-up and utilization of the software.

Next, another possible operation in terminal software management is a maintenance operation 3. This is an operation by which the software component may be upgraded with a new deployment (e.g. a so-called patch) or reconfiguration to adapt to changed terminal conditions.

Yet another possible operation in terminal software management is a monitoring operation 4. This operation consists in gathering and reporting back performance information obtained from measurement points within the installed software component, or other points in the terminal. These measurements are sent back to the management platform of the terminal, which may decide to trigger a maintenance operation.

Lastly, another possible operation in terminal software management is a deletion operation 5. This is an operation by which the management platform of the terminal removes a previously installed software component in such a way that the terminal recovers the state prior to the software installation. This may imply the reconfiguration of the terminal.

The mechanisms for remote terminal management are established for the usual case where the terminal and the management platform are situated in the same administrative domain. An administrative domain is a group of hosts, routers and the interconnecting network, operated and managed by a single administrative authority, with common rules and procedures. The expression is defined in the Internet Engineering Task Force ('IETF') RFC 1136 as "A collection of End Systems, Intermediate Systems, and subnetworks operated by a single organization or administrative authority. The components which make up the domain are assumed to interoperate with a significant degree of mutual trust among themselves, but interoperate with other Administrative Domains in a mutually suspicious manner". However, problems arise if the terminal is situated in a different administrative domain from the management platform.

One example is that of Java-based applications, such as terminal-targeted Java 2, Micro Edition ('J2ME') applications or Enterprise-based business logic running EJB require a management framework. Java Management Extensions (JMX) is the standard management framework for such applications. This management framework assumes that the management application can reach the management agents running on the terminals. This is always the case when the management domain coincides with the access domain and the terminal is connected to the network. However, this is not the case anymore for roaming users, especially those linked in the network by wireless communication links. Wireless communication terminals often need to be managed by their home network or service providers that manage services over terminals using foreign access networks (WLAN, GPRS...). In such cases, private networks use Network Address Translation/Port Address Translation ('NAT/PAT') and/or Firewalls to disallow incoming connections to their terminals from outside their access domain. This has prevented JMX management information reaching the terminals in the private networks.

The problem is likely to be compounded by the arrival of third generation systems, the multiplicity of wireless systems (UMTS, GPRS, WLAN, Broadcast systems) and the advent of reconfigurable terminals, especially as such wireless systems need efficient service and terminal management. Future scenarios are based on the assumption that terminals will be multi-technology enabled and network operators will cooperate to deliver end-to-end services.

Already, incoming management connections on a GPRS terminal are not possible due to:
- Temporary assignment of IP addresses to the Packet Data Protocol ('PDP') context,
- Explicit terminal initiated PDP context activation, and
- NAT usage by network operators.

The present invention provides a means for management of a communications terminal situated in one administrative domain using a management platform in a different administrative domain.

### Summary of the invention

The present invention provides a method of and a terminal and apparatus for communication as described in the accompanying claims.

### Brief description of the drawings

Figure 1 is a flow chart of terminal software management operations during the life of a terminal,
Figure 2 is a schematic diagram of a communications network with a known terminal software management system,
Figure 3 is a schematic diagram of a communications network with a terminal software management system in accordance with one embodiment of the invention, given by way of example,
Figure 4 is a flow chart similar to Figure 1 showing some protocols applicable to different terminal software management operations,
Figure 5 is a schematic diagram of a communications network with a terminal software management system in accordance with another embodiment of the invention, given by way of example, and
Figure 6 is a schematic diagram of a communications network with a terminal software management system in accordance with yet another embodiment of the invention, given by way of example.

### Detailed description of the preferred embodiments

Figure 2 shows a permanently connected network comprising a terminal 6 and a manager entity 7 for the terminal 6, the manager entity forming part of a terminal management platform. The terminal 6 and the manager entity 7 communicate over the Internet 8. The terminal 6 comprises a management agent 9 including a data base 10, a server 11 and a client 12. The software of the terminal 6 includes a managed application 13 and instrumentation 14 measuring performance information obtained from measurement points within the installed software component, or other points in the terminal. The manager entity includes a Web browser 15 and a Web server 16.

In this known system, the management agent of the terminal 6 and the manager entity 7 are in the same administrative domain, which allows them to communicate freely by Hyper-Text Transport Protocol ('HTTP'), or by Remote Method Invocation ('RMI'). The managed application 13 in the terminal 6 offers to the management agent 9, through its instrumentation 14, a list of modifiable parameters and available functions. The management agent 9 processes this information and stores it in the database 10. It is also responsible for communicating with the manager entity 7 by sending and receiving requests over the internet 8.

Usage of protocols implies that a network is set up between two end-points. In an IP context, the two end-points may belong to different administrative domains (i.e. operated by different organizations). Typically, borders between administrative domains are set in form of gateways that do not enable transparent transfer of data. Such gateways are known as e.g. firewalls and characterized by the fact that they block transfer of protocols (recognized by a port number) for security reasons. Another typical operation of firewalls is the translation of network addresses (like IP addresses) in order to cope with limited address spaces (like in IPv4) or to mask the actual addresses used by network elements in a given domain. This causes problems for the communication of terminal management messages between the terminal 6 and the management agent 9, even in the system of Figure 2.

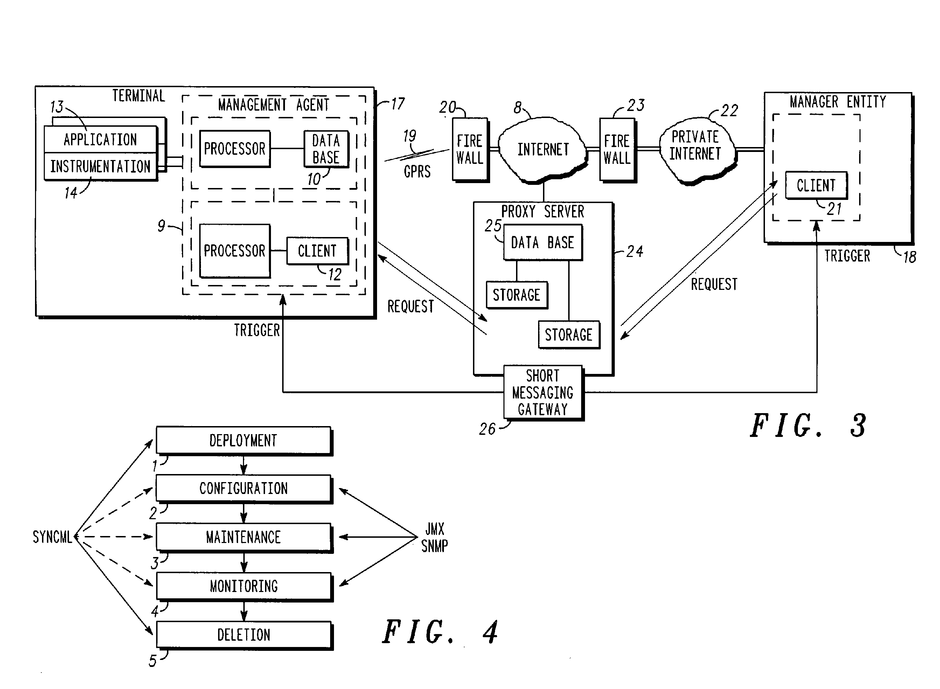

Figure 3 shows a network comprising a terminal 17 and a manager entity 18 for the terminal 17, the manager entity forming part of a terminal management platform. The terminal 17 and the manager entity 18 communicate over the Internet 8 but the communication passes over a wireless link 19, in this embodiment of the invention a GPRS mobile telephone link. A firewall 20 is positioned between the GPRS domain and the Internet 8. The terminal 17 comprises a management agent 9 including a data base 10, a server 11, a client 12, a managed application 13 and instrumentation 14 similar to the corresponding elements of the terminal 6 but adapted to wireless operation and the corresponding protocols, as described below. The manager entity 18 includes a client 21 and in this embodiment of the invention is part of a private intranet 22 that communicates with the Internet 8 through a firewall 23.

in this system, the management agent 9 of the terminal 17 is in the wireless link operator's administrative domain and the manager entity 18 is in a different administrative domain and the two domains are separated by the firewalls 20 and 23. The terminal 17 can send and receive data messages to and from the Internet 8 through the firewall 20 subject to restrictions concerning the protocols that may be used over the wireless links and the authorized protocols going through the firewalls 20 and 23 NATs.

A large number of protocols, intrinsic to terminal management operations, can be envisaged for each management operation. In this embodiment of the present invention, as shown in Figure 4, Synchronization Markup Language ('SyncML') is used for the messages relating to the deployment and deletion operations, and it may also be used for configuration, maintenance and monitoring operations. JMX and Simple Network Management Protocol ('SNMP') are used for configuration, maintenance and monitoring operations.

SyncML is a protocol based on XML syntax used to synchronize remote databases (e.g. one in the network being the image of the one in the terminal). It has been initially used for synchronizing data associated to applications (e.g. agendas, contact lists) but can also be used to synchronize the information base describing terminal state in the data base 10. The terminal state can include the software components installed, hence synchronization can lead to the installation of software components in order to reflect the terminal state maintained in the network. Typical synchronization operations consist in adding new information, updating existing information, deleting information, where the information can be a parameter or a piece of code.

SNMP has been designed in the IETF for the management of network elements in IP networks. It consists of simple methods like get, set acting on a Management Information Base ('MIB') reflecting the parameters and the measurement points within the network element. Applied in context of terminal management, the terminal would be considered as a network element. However, because a limited throughput wireless link connects the terminal to the network, SNMP is not optimal.

Accordingly it is preferred to use JMX for configuration, maintenance and monitoring operations. JMX is an extension to Java enables the instrumentation of Java applications. With such approach, Java applications become observable and controllable hence offering means to become manageable. JMX technology provides the tools for building distributed, web-based, modular and dynamic solutions for managing and monitoring devices, applications and service-driven networks

However, the terminal management messages to be exchanged are likely to be blocked by the firewalls 20 and 23 in a case like Figure 3 where the management entity 18 and the management agent 9 are situated in different administrative domains. Also, especially in networks involving a mobile terminal 17 using a wireless link 19, the connection will not be permanent and a network architecture and terminal management mechanism functioning in these conditions are required.

In this embodiment of the present invention, the solution is based on the use of an intermediate proxy server 24 to store, forward and process management information and, in particular, management messages intended for terminals such as user terminal 17 and network equipments. The management information is encoded into messages addressed to the relevant terminal such as 17, using one of the message protocols accepted for data messages by the terminal and the rest of the network, before being sent on the links. Such protocols inherently pass firewalls and NAT/PAT obstacles, like ordinary data messages.

This adaptation is transparent for the management plane. In other words, existing management software can be integrated without requiring additional changes. The manager entity 18 encodes the requests containing management information and posts them to the intermediate server 24, which stores them and processes them. The terminals or network equipments, such as 17, contact the same intermediate server 24 to retrieve their corresponding management request messages, and to return monitoring information to the manager entity 18 through the intermediate server 24.

The intermediate server includes a database 25 for storing the data received from the terminal 17 during monitoring and is synchronised with the database 10 of the terminal 17.

The management agent 9 of the terminal 17 and the manager entity 18 can now exchange any type of management information encoded in JMX, SNMP or other format even though they are situated in different administrative domains. They will communicate through the proxy server 24, using one of the possible data message protocols such as, in this embodiment of the invention: Email-based protocols, for example SMTP, POP3, IMAP, SyncML.... The proxy server 24 stores and processes the management information received. Typical process would be filtering, coherence checking, removal of outdated information.

In this embodiment of the invention, the proxy server 24 also sends notification messages to the management agent and the manager entity when messages are stored for them to retrieve from the server. Such notification messages pass through a different gateway 26 in this embodiment of the invention, using the Short Messaging System ('SMS') for example, and do not need to pass through the firewalls 20 or 23.

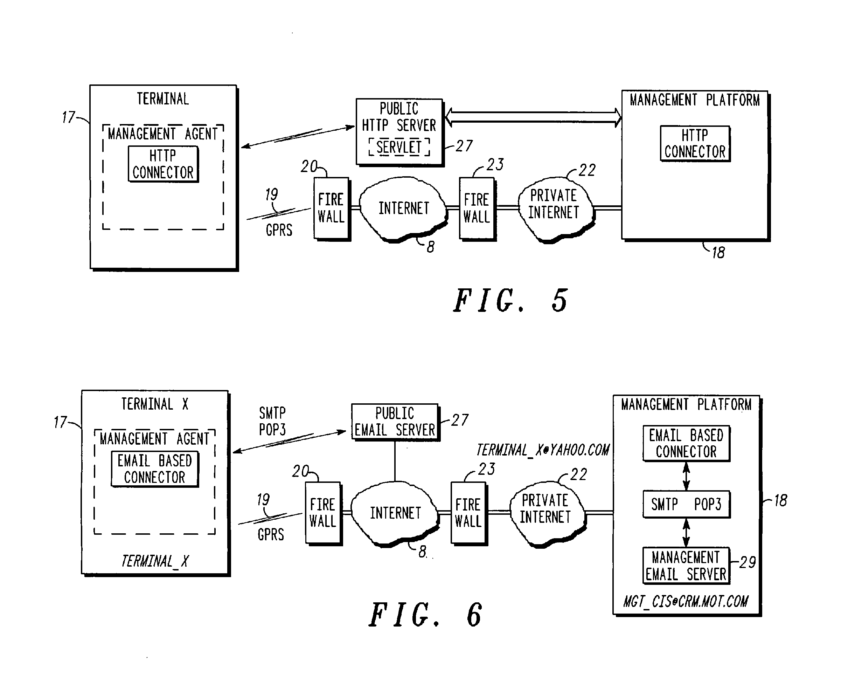

Figure 5 shows another embodiment of the present invention in which elements similar to those of Figure 3 bear similar references. In this embodiment, management messages are transported encoded into messages using HTTP protocol and communication, which is also available to the terminal 17 for data message communication. The proxy server is an HTTP Servlet running on a public server 27. A servlet is a small program that runs on a server, analogous to a Java applet, a small program that is sent as a separate file along with a Web page. Preferably, the management information messages are encoded in JMX before being transported by HTTP. Since the servlet is contained in a public web server 27, terminals 17 or private management entities in platforms 18 can connect to it, bypassing NAT/PAT and firewalls. The connections to the servlet are based on pooling or following notifications by SMS or Broadcast (DVB) for example. The manager entity 18 encodes the JMX requests and posts them in HTTP to the web server 27. The terminals such as user terminal 17 or equipments management contact the same server 27 to retrieve their corresponding JMX management requests.

In one preferred deployment, there is a Private address for the terminal 17 or there is a Forbidden incoming connection for the terminal 17 and a Private address for the management platform 18: in this case, the communication end-to-end in both directions goes through the proxy 27. In another preferred deployment, there is a Private address for the terminal 17 or there is a Forbidden incoming connection for the terminal 17 and a Public address for the management platform 18: in this second case, the communication towards the terminal 17 goes through the proxy 27, while the communication towards the management platform 18 can be direct.

Figure 6 shows yet another embodiment of the present invention, in which the management messages are transported using email protocols and the proxy is a mailbox in an email server 28 in the public domain. This email-based architecture enables management information messages to be transported by email protocols (SMTP, POP3, IMAP) or SyncML: On the agent side, the management plane works over the email adaptor as follows: the public address-based email server 28 contains a management-dedicated email account for each terminal for example. The terminal 17 periodically checks for the presence of emails in the server 28 receives its emails. Each management email is addressed to the terminal 17 and contains an encoded management request using a protocol such as SNMP, JMX or CORBA for example. The result of a management request is sent back to the management application in the management entity in the platform 18 also by email. The management application has an email server 29 and uses an email account to receive the return values of the management operations. Since email traffic is not blocked by the firewalls such as 20 and 23 generally, in many cases this solution allows invoking management operations over domains where incoming connections to the terminal are not allowed. The protocols that can be used are SMTP, POP3 and even SyncML to synchronize the local mailbox of the terminal with the one where the management requests are stored. If security is required, emails can be encrypted.

## Claims

1. A method of communication in a network, comprising communicating data between first and second terminals and communicating terminal management messages from a management platform (18) to at least said first terminal (17), at least said first terminal (17) being situated in a different administrative domain from said management platform (18),
**characterised in that** said management messages are encoded in messages addressed to said first terminal (17) and sent to intermediate server means (24, 27, 28) in said network, said intermediate server means (24, 27, 28) being accessible to said first terminal (17).

2. A method of communication as claimed in claim 1, wherein said first terminal (17) communicates with said second terminal and with said management platform (18) over at least one wireless link (19).

3. A method of communication as claimed in claim 1 or 2, wherein said first terminal (17) is a user terminal.

4. A method of communication as claimed in any preceding claim, wherein said management message includes an application programme element for installation in said first terminal (17).

5. A method of communication as claimed in any preceding claim, wherein said data is communicated using one or more message protocols and said management messages are encoded in at least one of said message protocols at least when sent between said intermediate server means (24, 27, 28) and said first terminal (17).

6. A method of communication as claimed in claim 5, wherein said management messages are encoded in the same message protocol as said data, at least when said management messages are sent between said intermediate server (24, 27, 28) means and said first terminal (17).

7. A method of communication as claimed in claim 5 or 6, wherein said at least one message protocol includes Simple Mail Transfer Protocol.

8. A method of communication as claimed in any of claims 5 to 7, wherein said at least one message protocol includes Post Office Protocol (POP3).

9. A method of communication as claimed in any of claims 5 to 8, wherein said at least one message protocol includes SyncML to synchronize the local email box of the terminal (17) with an email box at said server means (28) where management requests are received.

10. A method of communication as claimed in any of claims 5 to 9, wherein said at least one message protocol includes HyperText Transfer Protocol.

11. A method of communication as claimed in any preceding claim, wherein said management messages are formulated using SNMP, JMX or CORBA.

12. A method of communication as claimed in any preceding claim, wherein said wireless link (19) is included in a management domain different from the management domain of said network.

13. A method of communication as claimed in any preceding claim, wherein said communications pass through a firewall (20, 23).

14. A method of communication as claimed in any preceding claim, wherein said intermediate server means (24, 27, 28) sends a notification message to said first terminal (17) if there is a management message at said intermediate server means (24, 27, 28) to be retrieved and said first terminal (17) retrieves said management message in response to said notification message.

15. A method of communication as claimed in claim 14, wherein said notification messages are encoded in Short Messaging System (SMS) protocol

16. A terminal (17) for communicating within a network by a method as claimed in any preceding claim and including communication means for sending said data to said second terminal and for receiving said data from said second terminal and said management messages from said intermediate server means (24, 27, 28), and management means (9) for decoding said network management messages received from said intermediate server means (24, 27, 28) and modifying operating parameters of the terminal (17) as a function of the decoded management messages.

17. A terminal as claimed in claim 16, wherein said communication means is arranged to communicate with said second terminal and with said management platform (24, 27, 28) over at least one wireless link (19).

18. A terminal as claimed in claim 16 or 17, wherein said communication means is arranged to send and receive said data using one or more message protocols and to receive said management messages encoded in at least one of said message protocols.

19. A terminal as claimed in any of claim 16 to 18, wherein said management means (9) is arranged to install in said terminal (17) an application programme element included in said management message.

20. A terminal as claimed in any of claim 16 to 19, wherein said communication means is responsive to a notification message received to retrieve said management messages encoded in at least one of said message protocols from said intermediate server means (24, 27, 28).

21. Apparatus for use in communication in a network by a method as claimed in any of claims 1 to 13, said apparatus comprising said intermediate server means (24, 27, 28) accessible to said first terminal (17) for connection with said network, and said management platform (18) for sending to said intermediate server means (24, 27, 28) said network management messages encoded in said messages addressed to said first terminal (17).

22. Apparatus as claimed in claim 21 and including data communication means for communicating said data using one or more message protocols and said management messages are arranged to be encoded in at least one of said message protocols at least when sent between said intermediate server means (24, 27, 28) and said user terminal (17).

23. Apparatus as claimed in claim 21 or 22 wherein said data communication means is responsive to a notification message received to retrieve said management messages encoded in at least one of said message protocols from said intermediate server means (24, 27, 28).

## Amended claims

### Amended claims in accordance with Rule 86(2) EPC.

**1.** A method of communication in a network, comprising communicating data between first and second terminals and communicating terminal management messages from a management platform (18) to at least said first terminal (17), wherein said first terminal (17) communicates with said second terminal and with said management platform (18) over at least one wireless link (19),
**characterised in that** at least said first terminal (17) is situated in a different administrative domain from said management platform (18), said wireless link (19) is included in a management domain different from the management domain of said network, and said management messages are encoded in messages addressed to said first terminal (17) and sent to intermediate server means (24, 27, 28) in said network, said intermediate server means (24, 27, 28) being accessible to said first terminal (17).

**2.** A method of communication as claimed in claim 1 or 2, wherein said first terminal (17) is a user terminal.

**3.** A method of communication as claimed in any preceding claim, wherein said management message includes an application programme element for installation in said first terminal (17).

**4.** A method of communication as claimed in any preceding claim, wherein said data is communicated using one or more message protocols and said management messages are encoded in at least one of said message protocols at least when sent between said intermediate server means (24, 27, 28) and said first terminal (17).

**5.** A method of communication as claimed in claim 4, wherein said management messages are encoded in the same message protocol as said data, at least when said management messages are sent between said intermediate server (24, 27, 28) means and said first terminal (17).

**6.** A method of communication as claimed in claim 4 or 5, wherein said at least one message protocol includes Simple Mail Transfer Protocol.

**7.** A method of communication as claimed in any of claims 4 to 6, wherein said at least one message protocol includes Post Office Protocol (POP3).

**8.** A method of communication as claimed in any of claims 4 to 7, wherein said at least one message protocol includes SyncML to synchronize the local email box of the terminal (17) with an email box at said server means (28) where management requests are received.

**9.** A method of communication as claimed in any of claims 4 to 8, wherein said at least one message protocol includes HyperText Transfer Protocol.

**10.** A method of communication as claimed in any preceding claim, wherein said management messages are formulated using SNMP, JMX or CORBA.

**11.** A method of communication as claimed in any preceding claim, wherein said communications pass through a firewall (20, 23).

**12.** A method of communication as claimed in any preceding claim, wherein said intermediate server means (24, 27, 28) sends a notification message to said first terminal (17) if there is a management message at said intermediate server means (24, 27, 28) to be retrieved and said first terminal (17) retrieves said management message in response to said notification message.

**13.** A method of communication as claimed in claim 12, wherein said notification messages are encoded in Short Messaging System (SMS) protocol

**14.** A terminal (17) for communicating within a network by a method as claimed in any preceding claim and including communication means for sending said data to said second terminal and for receiving said data from said second terminal and said management messages from said intermediate server means (24, 27, 28), and management means (9) for decoding said network management messages received from said intermediate server means (24, 27, 28) and modifying operating parameters of the terminal (17) as a function of the decoded management messages.

**15.** A terminal as claimed in claim 14, wherein said communication means is arranged to communicate with said second terminal and with said management platform (24, 27, 28) over at least one wireless link (19).

**16.** A terminal as claimed in claim 14 or 15, wherein said communication means is arranged to send and receive said data using one or more message protocols and to receive said management messages encoded in at least one of said message protocols.

**17.** A terminal as claimed in any of claim 14 to 16, wherein said management means (9) is arranged to install in said terminal (17) an application programme element included in said management message.

**18.** A terminal as claimed in any of claim 14 to 17, wherein said communication means is responsive to a notification message received to retrieve said management messages encoded in at least one of said message protocols from said intermediate server means (24, 27, 28).

**19.** Apparatus for use in communication in a network by a method as claimed in any of claims 1 to 11, said apparatus comprising said intermediate server means (24, 27, 28) accessible to said first terminal (17) for connection with said network, and said management platform (18) for sending to said intermediate server means (24, 27, 28) said network management messages encoded in said messages addressed to said first terminal (17).

**20.** Apparatus as claimed in claim 19 and including data communication means for communicating said data using one or more message protocols and said management messages are arranged to be encoded in at least one of said message protocols at least when sent between said intermediate server means (24, 27, 28) and said user terminal (17).

**21.** Apparatus as claimed in claim 19 or 20 wherein said data communication means is responsive to a notification message received to retrieve said management messages encoded in at least one of said message protocols from said intermediate server means (24, 27, 28).
